Europäisches Patentamt

European Patent Office

Office européen des brevets

(11) Publication number: **0 069 574**
**B1**

(12) **EUROPEAN PATENT SPECIFICATION**

(45) Date of publication of patent specification: **10.05.89**

(21) Application number: **82303517.5**

(22) Date of filing: **05.07.82**

(51) Int. Cl.⁴: **G 06 K 7/10**

(54) Apparatus for reading bar code.

(30) Priority: **07.07.81 JP 106568/81**

(43) Date of publication of application:
**12.01.83 Bulletin 83/02**

(45) Publication of the grant of the patent:
**10.05.89 Bulletin 89/19**

(84) Designated Contracting States:
**DE FR GB**

(56) References cited:
**FR-A-2 227 581**
**US-A-4 091 270**
**US-A-4 101 072**
**US-A-4 158 194**
**US-A-4 188 626**

(73) Proprietor: **NIPPONDENSO CO., LTD.**
**1, 1-chome, Showa-cho**
**Kariya-shi Aichi-ken (JP)**

(72) Inventor: **Masahiro, Hara**
**6-30, Tenno-cho Kariya-shi**
**Aichi-ken (JP)**
Inventor: **Atsutoshi, Okamoto**
**7-21, Aza Iguiba Oaza Morioka Higashiura-cho**
**Chita-gun Aichi-ken (JP)**
Inventor: **Toshiyasu, Sakai**
**8, Hamabaura Hitotsugi-cho**
**Kariya-shi Aichi-ken (JP)**

(74) Representative: **Hartley, David et al**
**4 Dyer's Buildings Holborn**
**London EC1N 2JT (GB)**

Courier Press, Leamington Spa, England.

## Description

This invention relates to apparatus for reading a bar code which reads a bar code photoelectrically in a marketing system in which bar codes each printed on a recording medium, such as a label, are circulated together with goods.

In conventional bar code reading apparatus, although a light pen, an electonic scanning system using an image sensor, or laser scanning system using a laser has been used, all these systems are apt to be affected by a stain or blank. When, a stain or blank on a reading line is imaged to be scanned for instance, accurate detection of a bar code cannot be effected, and therefore, the conventional apparatus is arranged to indicate by a lamp or the like that the bar code is unreadable. In such a case, it has been necessary to repeat the reading operation several times by changing the attitude of a hand unit of the bar code reading apparatus to avoid the stain or blank. However, when the stain or blank is too large, it has been impossible to read such a bar code.

It is an object of the present invention to remove the above-described drawback inherent in conventional bar code reading apparatus.

United States 4,158,194 discloses optical reading apparatus comprising a hand-held optical scanner including a keyboard and connected by lead wires to a data processing unit wherein first data indicative of markings to be read and second data corresponding to manipulation of the keyboard are processed to recognise the marking information either automatically read or input via the keyboard, wherein the optical scanner comprises photo-sensitive means for scanning and converting an image of markings to be read into an electrical signal, a clock generator for producing first and second trains of clock pulses with which the photo sensitive means is controlled to effect scanning, and the keyboard which is manually operable to generate electrical key signals each corresponding to a predetermined numeral.

The invention provides such apparatus characterised in that the apparatus is for reading a bar code, in that the scanner further comprises shift register means for converting the said key signals to serial signal form in response to the trains of clock pulses, and in that the processing unit comprises a signal processing circuit connected along the lead wire means to the electrical signal from the photo sensitive means for generating the said first data, and a code key inputting circuit connected along the lead wires and responsive to the said serial signal and the trains of clock pulses, for generating the said second data.

An advantage of the present invention is that it is possible to input bar code information by manual operation of manually operable keys even if it is not possible to recognize a bar code with the reflected light from the bar code. The keys may be provided on a hand held unit of the apparatus so that the keys may be manipulated when the user recognizes that reading cannot be satisfactorily effected by the apparatus.

According to a preferred feature of the present invention, another manually operable key may be provided to give a multiplication instruction so that read data or manually input data of a bar code may be multiplied by a desired number corresponding to the number of bar codes having common information thereon.

Further preferred features are defined in the dependent claims.

The invention will now be described by way of example with reference to the drawings in which:

Fig. 1 is an entire structural view showing an embodiment of a bar code reading apparatus of the present invention;

Fig. 2 is a cross-sectional view of a hand held reader of Fig. 1;

Fig. 3 is an outside view of the hand held reader of Figs 1 and 2.

Fig. 4 is an electrical wiring diagram of the electrical circuitry of the apparatus of Fig. 1;

Fig. 5 is a detailed electrical wiring diagram of the main part of the circuitry of Fig. 4;

Figs. 6A, 6B and 6C are waveform charts for the description of the operation; and

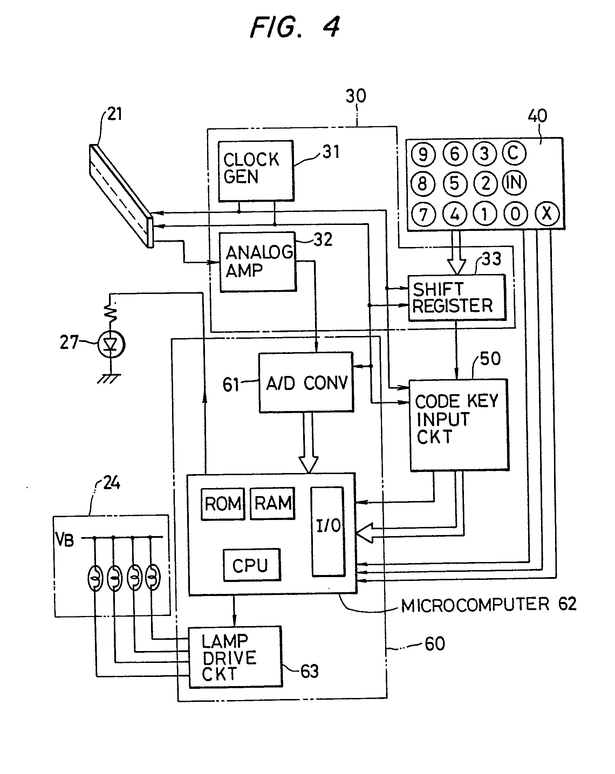

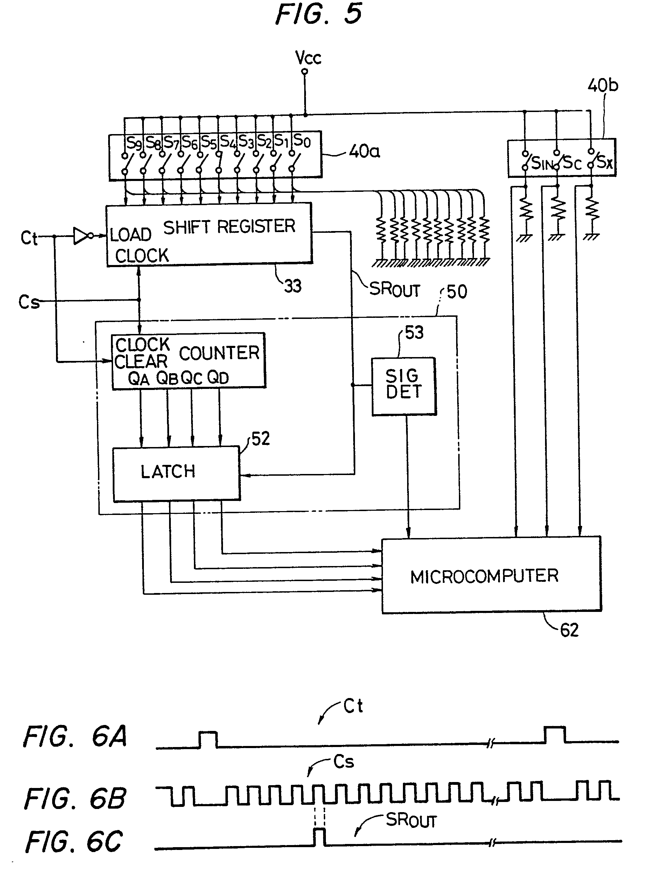

Figs, 7 and 8 are flowcharts useful for understanding the operation of the microcomputer of Figs. 4 and 5.

The same or corresponding elements and parts are designated at like reference numerals throughout the drawings.

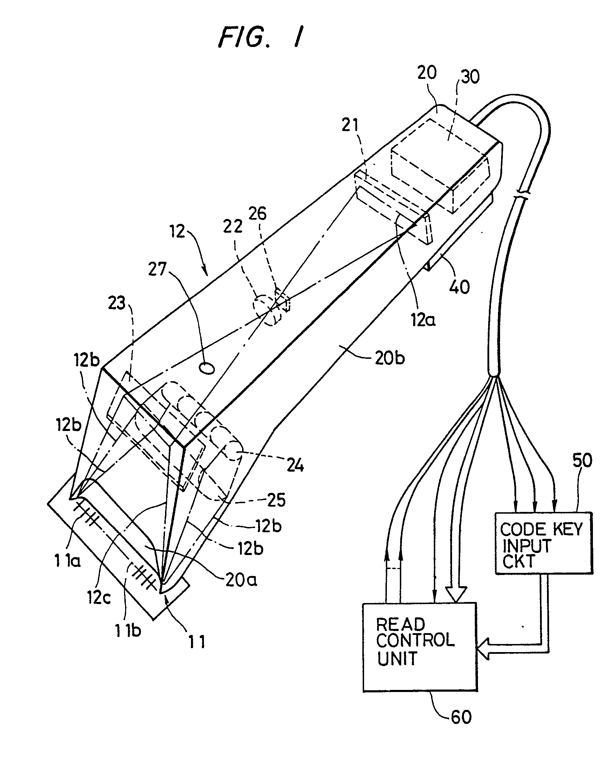

Referring to Fig. 1 a schematic view of an embodiment of the apparatus for reading a bar code according to the present invention is shown. The apparatus generally comprises a hand held bar code reader 12, a code key inputting circuit 50 and a reading control unit 60. The hand held bar code reader 12 comprises generally, as will be described hereinbelow, an illuminating system which illuminates a bar code to be recognized, an optical system for leading reflected light from the bar code, and an image sensor for converting the reflected light into an electrical signal.

The reference 11 is a bar code label on which is printed a bar code 11a formed by black and white bars constituting a light and shade pattern. A line 11b which intersects the bar code lla at right angles is an imaginary reading line illustrated for the sake of description. The hand held reader 12 has a shape so that it can be manually moved by a user to freely change the attitude thereof to detect the bar code 11a in a given manner.

The reader 12 comprises in its casing 20 an image sensor 21 which converts an image 12a of the bar code 11a imaged on its surface into an electrical signal, a diaphragm member 26 having an elongate slit therein located so that the light and shade portions or the intensity of the reflected light on the reading line 11b is imaged on the surface of the image sensor 21, a lens 22, a reflecting mirror 23, a light source 24 having four lamps for illuminating the reading line 11b of the bar code 11a, and a condeser lens 25. The reference 20a is a reading opening, which is an inlet of reflected light, formed at one end of the casing 20. The reading opening 20a has a shape so that it defines the length of the reading line 11b to enable a user to see the redable length. Focussing is effected by making the reading openging 20a contact the bar code label 11. The reading opening 20a is provided at a portion which is slightly inclined or bent from the longitudinal axis of a body 20b functioning as a gripping portion for easy operation of the reader 20. The inside diameter of a portion neighbouring the reading opening 20a is made larger than that of the body 20b so that the above-mentioned reflecting mirror 23, light source 24 and the condenser lens 25 are built in.

The above-mentioned light source 24 and the condenser lens 25 have effective width substantially equal to the reading line 11b on the bar code 11a so that the reading line 11b can be uniformly illuminated. Namely, the light source 24 comprises four lamps arranged in line for a length substantially equal to the reading line 11b of the bar code 11a, while the condenser lens 25 has a length substantially equal to the length of the reading line 11b of the bar code 11a and is made of a semicylindrical lens having a shape that a cylinder has been cut in a direction of its height. Luminous flux 12b emitted forward from the light source 24 is condensed by the semicylindrical lens 25 so as to illuminate the bar code 11a centering a focal point in the form of a continous line. The light source 24 and the semicylindrical lens 25 are arranged to be parallel to the bar code reading line 11b in front of the above-mentioned reading opening 20a, and it is adjusted such that the linear focal point of the semicylindrical lens 25 is on the reading line 11b of the bar code 11a. Although the semicylindrical lens 25 condenses the liminous flux into a linear focal point, it does not have a condensing function in the direction of the reading line 11b. Therefore, the length of the lamp arrangement may be slightly shorter than that of the reading line 11b if the light source 24 is slightly spaced from the lens 25 because sufficient illuminance can be ensured on the reading line 11b. With the provision of the in-line lamps of the light source 24 and the semicylindrical lens 25, when the reading opening 20a of the hand held reader 12 is correctly directed to the bar code 11a, illuminance distribution on the bar code label 11 is such that the maximum illuminance is obtained at a belt-shaped region having the length of the reading line 11a defined by the reading opening 12a and a predetermined width.

The reference 27 is a light-emitting diode arranged to emit light and to indicate when completing bar code reading. The reference 30 is a terminal electronic circuit stored in a casing 20, where the terminal electronic circuit drives the image sensor 21 to effect electronic scanning and amplifies the photoelectrically converted signal. The reference 40 indicates manually operable keys having 10 numerical keys, a clear key, IN key and a multiplication (X) key so that a plurality of numerical data of the bar code 11a can be input by manual operation in place of reading operation when it is ascertained that reading operation by electronic scanning is impossible by nonindicat- ing operation of the light-emitting diode 27. Each of the keys 40 is associated with a normally open switch as shown in Fig. 5. The reference 50 is a code key inputting circuit which is responsive to manipulation signal from the manually operable keys 40 to convert the same into numerical data. The reference 60 is a reading control unit having a microcomputer, which reading control unit 60 instructs driving of the light source 24, controls the operation of the light-emitting diode 27, processes various signals from the terminal electronic circuit 30, and processes the numerical data from the code key inputting circuit 50. The reading control unit 60 and the code key inputting circuit 50 are electrically connected to the reader 12 by means of flexible bounded lead wires so that the reader 12 can be readily put close to goods on which the bar code label 11 is attached.

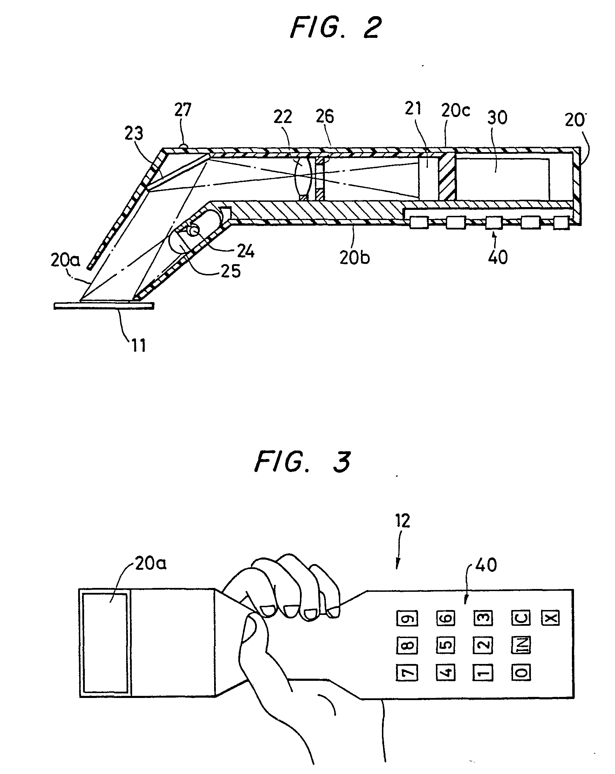

Fig. 2 is a side cross-sectional view showing the inside structure of the above-mentioned bar code reader 12. The casing 20 is made of a mold of a synthetic resin. The reference 20c is a body tube made of a synthetic resin, which is secured to the inside of the casing 20, and the image sensor 21 is fixed to one end of the body tube. The body tube 20c holds the above-mentioned lens 22 and the diaphragm member 26 used for adjusting the amount of light and focal depth so that excessive light from the reading opening 20a is prevented from being transmitted. In addition, the body tube 20c is widened like a horn so as to secure therein the above-mentioned mirror 23 used for reflecting the reflected light 12c from the reading line 11b of the bar code label 11 in the direction toward the lens 22.

Furthermore, the body tube 20c secures the light source 24, the semicylindrical lens 25, a fixing member of the light source 24, and the reflecting mirror where unshown volts or the like are used to fix these members and the fixing positions of these members are adjusted so that illumination is effected along the above-mentioned reading line 11b of the bar code 11a in front of the reading opening 20a of the casing 20. The fixing member not only secures the light source 24 but also makes an electrical connection. To this end the fixing member is connected via an unshown lead wire to the outside of the casing body 20b. The above-mentioned reflecting mirror has a shape of semicylinder having a convex surface having a reflecting film thereon so that the bar code label 11 is illuminated further brightly by reflecting the backward luminous flux from the light source 24 toward the semicylindrical lens 25 (namely, to the front).

Inside the casing 20 is arranged such that external interference light does not mix with the reflected light 12c from the bar code label 11, which reflected light is used for making an image on the surface of the image sensor 21. In detail, the body tube 20c is hermetically secured, while the casing 20 is built to be shielded except for the reading opening 20a, where the inside of the casing 20 and the inside of the body tube 20c are painted with frosted black paint.

With the above arrangement, assuming that the bar code label 11 is in the condition of Figs. 1 and 2, and the light source 24 is emitting light to illuminate the reading line 11b, the luminous flux from the light source 24 is condensed by the semicylindrical lens 25 to illuminate the bar code label 11. With this luminous flux, reflected light 12c having different distribution of light intensity due to reflective coefficient difference caused by black-white bar marks on the bar code label 11 occurs, and the reflected light images an image 12a of the black-white bar marks of the bar code label 11 on the surface of the image sensor 21 after being transmitted through the mirror 23 and the lens 22.

In the case that it is impossible to read the bar code 11a with the image sensor 21, the light-emitting diode 27 does not emit light. In such a case, keys of the manually operable keys 40 provided to the casing 20 as shown in Fig. 3 are depressed to input a plurality of numerical data corresponding ot the bar code 11a one after another.

Fig. 4 shows the entire structure of the electrical circuitry used in the apparatus of Fig. 1. In Fig. 4, the reference 31 is a reference clock generating circuit which sends first and second trains of clock pulses Ct and Cs used as driving signals for the scanning operation to the image sensor 21. The first and second trains of clock pulses will be respectively referred to as synchronous pulses Ct and reference clock pulses Cs hereafter. The reference 32 is an analog amplifier for amplifying a low-level video signal from the image sensor 21. The reference 33 is a shift register for temporarily storing data corresponding to numerical values 0 to 9 from the numerical keys of the manually operable code keys 40 in synchronizm with synchronous pulse Ct, and for effecting shifting in response to the reference clock pulse Cs as much as the number of clock pulses corresponding to the stored signal. The code key inputting circuit 50 which receives a shifting output signal $SR_{OUT}$ from the shift register 33, the reference clock pulses Cs and the synchronous pulse Ct generates numerical data corresponding to the numerical values of manipulated numerical keys $S_0$ ... $S_9$.

On the other hand, the A/D converter 61 responsive to the amplified signal from the above-mentioned analog amplifier 32 generates one after another digital data each corresponding to the width of each of the parallel bars of the bar code 11a in accordance with the amplified signal. The reference 62 is a microcomputer responsive to the digital data from the A/D covnerter 61, to the numerical data from the code key inputting circuit 50, and to control signals generated by the manipulation of control keys 40b of the manually operable keys 40 for executing digital operations in accordance with a predetermined control program. The operation of the microcomputer 62 will be described in detail later with reference to flowcharts. The microcomputer 62 causes the light-emitting diode 27 to emit light when completing the reading operation of a bar code, and sends the result of above-mentioned operations to an unshown cash register, central computer or the like. Furthermore, with driving instruction from the microcomputer 62 a lamp driving circuit 63 is triggered to start operation when starting reading operation of a bar code so that the four lamps of the light source 24 are energized.

Fig. 5 shows a detailed diagram of an electrical circuit for inputting numerical data by means of the manually operable code keys 40. In Fig. 5, the manually operable code keys 40 comprises ten-key portion 40a having ten numerical keys or switches $S_0$, $S_1$, $S_2$ ... $S_9$, and the control keys 40b having an IN key or switch $S_{IN}$, a clear key or switch Sc and a multiplication key or switch Sx. The switches associated with these keys are arranged such that resistors are respectively connected to the numerical switches $S_0$ ... $S_9$ and to the three switches $S_{IN}$, Sc and Sx so that signals from the ten numeral switches $S_0$ to $S_9$ corresponding to numerals O to 9 are applied to the shift register 33 in parallel, while signals from the three control switches are applied to the microcomputer 62. The reference 51 is a counter which repeatedly counts the number of the reference clock pulses Cs. Namely, the counter 51 is arranged to be cleared or reset to zero by the synchronous pulses Ct repeatedly. The reference 52 is a latch for temporarily storing the counted value from the counter 51 when the shifting output signal $SR_{OUT}$ is generated in the shift register 33, where the stored data corresponds to a numerical value of the numerical switch $S_0$ ... $S_9$ depressed. The reference 53 is a signal detector which detects the shifting output signal $SR_{OUT}$ from the shift register 33, and the microcomputer 62 is arranged to input the stored data of the latch 52 in response to a detection signal from the signal detector 53.

Now the operation of the above structure will be described. First of all, an unshown start switch is turned on to put the electrical circuit in operating condition, and then the bar code reader 12 is arranged manually in a position of Fig. 1 with respect to the bar code label 11. Therefore, the illuminating light from the energized light source 24 is directed via the semicylindrical lens 25 to the bar code 11a. Reflected light from the bar code 11a is reflected at the reflecting mirror 23 to change its direction so as to image the bar code image 12a on the surface of the image sensor 21 after passing thorugh the lens 22 and the elongate slit of the diaphragm member 26. The image sensor 21 converts the image 12a into an electrical signal one after another in synchronizm with the synchronous pulses Ct and the reference clock pulses Cs from the clock generator 31. Then digital data corresponding to the bar code 11a is input via the analog amplifier 32 and the A/D converter 61 to the microcomputer 62.

With this operation the microcomputer 62 executes operations to detect whether read data defined by the above-mentioned digital data accords with a predetermiend format of the bar code, and when accordance is ascertained, reading operation by electronic scanning in the image sensor 21 is completed to energize the light-emitting diode 27.

On the other hand, if a stained portion of the bar code 11a lies on the reading line 12a of the image sensor 21, the light-emitting diode 27 is kept nonlighting in respose to the microcomputer 62 deciding that reading of the bar code 11a is impossible.

In such a case, the reading opening 20a of the bar code reader 12 is manually moved relative to the bar code 11a in a direction perpendicular to the reading line 11b to repeat reading operations. In the case that bar code reading with electronic scanning in the image sensor 21 is impossible and this situation is ascertained by the nonlighting of the light-emitting diode 27, the switches of the manually operable code keys 40 provided to the casing 20 are depressed to input numerical information of a plurality of places one after another corresponding to unshown numerals written beside the bar code 11a. In other words, the user of the bar code reading apparatus reads the numerals written along the bar code 11a to input the numerical data manually via the numerical switches $S_0 ... S_9$ after manipulating the IN key $S_{IN}$.

Let us assume that the switch $S_4$, for instance, corresponding to a numeral "4" is depressed at this time, the parallel input of the shift register 33 assumes "0000100000", and this value is loaded in the shift register 33 at the timing of the synchronous pulse Ct of Fig. 6A, and simultaneously the counter 51 is cleared. Then the contents of the sbift register 33 are shifted leftward in the drawing in response to the reference clock pulses Cs of Fig. 6B, and simultanously, the number of the reference clock pulses Cs are counted by the counter 51. Therefore, the counter 51 counts up by 1 each time the contents of the shift register 33 is shifted by 1.

With shifting in the shift register 33 in response to a fifth clock pulse, a shifting output pulse $SR_{OUT}$ of logic "1" is derived from its output terminal as shown in Fig. 6C, and the counted value of the counter 51 is temporarily stored in the latch 52 at the timing of the rising edge of the pulse $SR_{OUT}$. Therefore, a binary data corresponding to a numeral "4" is stored in the latch 52. Subsequent to this, the binary data indicative of numeral "4"is input into the microcomputer 62 in response to the detection signal from the signal detector 53. Namely, this operation is repeated as long as the switch $S_4$ is depressed, and it can be ascertained that at least one of the numerical switches $S_0 ... S_9$ is depressed by detecting the presence of the rising edge of the shifting output pulse $SR_{OUT}$ in an interval between two consecutive synchronous pulses Ct. On the contrary, it is decided that none of the numerical switches $S_0 ... S_9$ is depressed any more in the absence of the shifting output pulse $SR_{OUT}$ so that the binary data is input into the microcomputer 62 at this time to wait for next manipulation of one of the numerical switches $S_0 ... S_9$.

In this way, a plurality of numerals corresponding to the bar code IIa is input with the manipulation of the numerical switches $S_0 ... S_9$, and after all the numerals of the bar code 11a have been input, the IN switch $S_{IN}$ of the control keys 40b is depressed again. With this operation, the microcomputer 62 processes the numeral data of the bar code 11a in place of the reading operation effected by the electronic scanning in the image sensor 21, and the light-emitting diode 27 is energized when data processing is completed. Namely, the light-emitting diode 27 emits light to indicate that manual inputting has been ended.

In the case that one or more of the the numerical switches $S_0 ... S_9$ are erroneously depressed, the clear switch Sc is depressed, and then the numerical switches $S_0 ... S_9$ corresponding to the plurality of numerals of the bar code 11a are depressed again one after another to input correct data.

Furthermore, in the case that a plurality of bar code labels having a common code are continuously present, for instance, in the case that the bar code reading apparatus is used as the terminal of POS (point of sales) to input the numerical code of the bar code of a plurality of the same goods, the multiplication switch Sx and one or more of the numerical switches $S_0 ... S_9$ coorresponding to the number of the goods are manipulated after the numerical codes are input by the manipulation of the numerical switches $S_0 ... S_9$, and thus input or feeding of numerical data of a plurality of goods is effected simply and quickly.

As described in the above, it is possible to simplify the circuit arrangement because the circuit for manually inputting the bar code information is capable of utilizing the synchronous pulses Ct and reference clock pusles Cs which are used for driving the image sensor 21. In other words, the clock generator 31 of Fig. 4 can be commonly used for both the circuit for automatic reading and for the circuit for manual input.

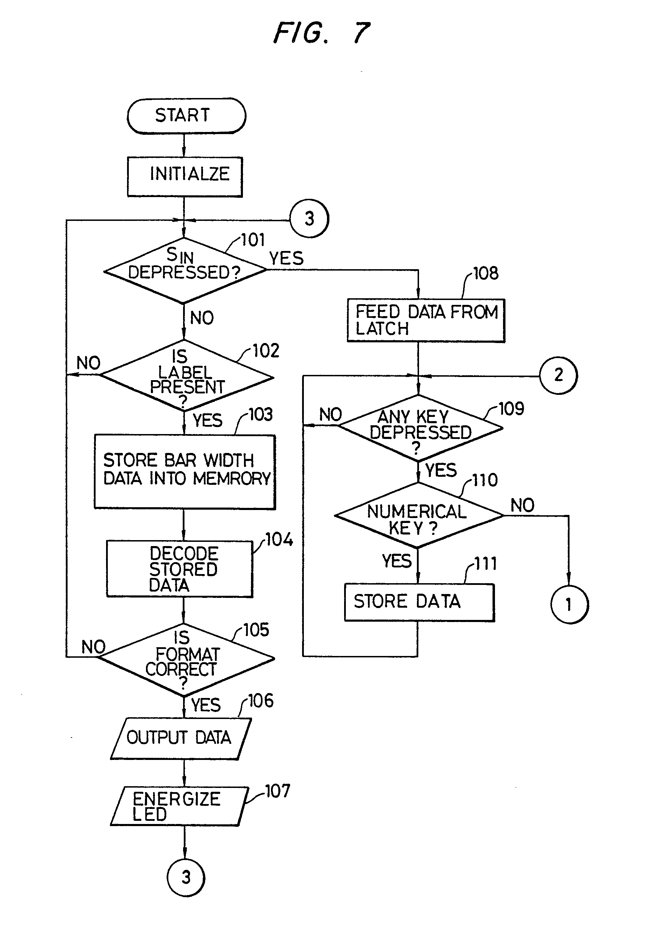

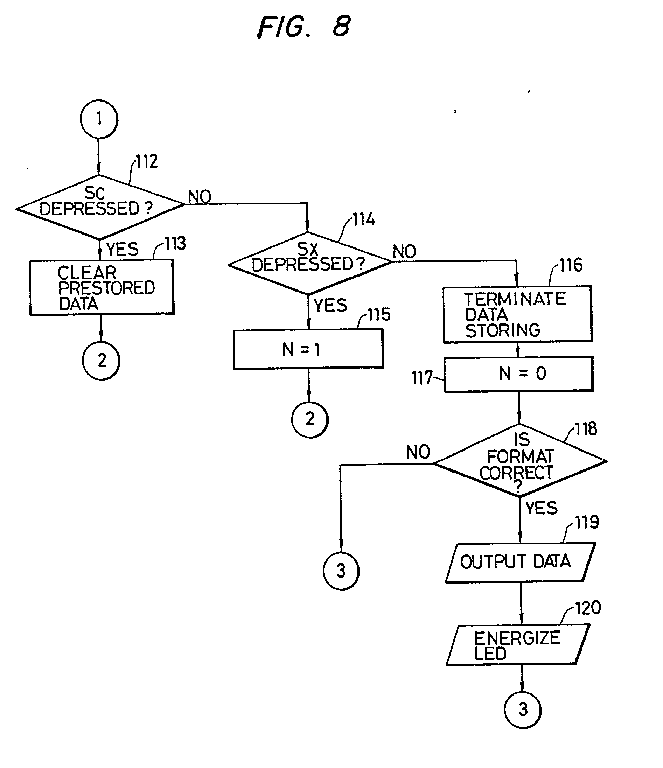

Figs. 7 and 8 are flowcharts useful for understanding the operation of the microcomputer 62 of Figs. 4 and 5. At the beginning of the operation of the microcomputer 62, initialization is effected and then, it is detected in a following step 101 whether the IN key $S_{IN}$ has been depressed. If it is detected that the IN key $S_{IN}$ not been depressed, it is detected in a following step 102 whether a bar code label 11a is present. If the answer of this step is NO, the above-mentioned step 101 takes place again.

If the answer of the step 102 is YES, a following step takes place 103 to store the data of width of each bar detected by the image sensor 21. In a following step 104, the stored data is decoded, and then a following step 105 is executed to see if the format defined by decoded data corresponds to a predetermined format which has been prestored in a memory. If the answer of the step 105 is NO, namely when it is detected that the format is incorrect, the step 101 takes place again. On the other hand, if the format is detected to be correct, a step 106 takes place to output the data. Subsequently, a step 107 takes place in which the light-emitting diode 27 is turned on, and the operational flow returns to the step 101 so that the above-mentioned steps 101 through 107 are repeatedly executed unless the IN key $S_{IN}$ is depressed.

When it is detected that the IN key $S_{IN}$ has been depressed, a step 108 takes place so that the microcomputer is made ready for receiving data from the latch 52 of Fig. 5. In a following step 109, it is detected whether one of the keys 40 has been depressed, and when the answer of the step 109 is YES, it is detected whether the depressed key is a numerical key $S_0$ ... $S_9$ or not. Namely, the detection signal from the signal detector 53 is detected to see whether at least one of the numerical keys $S_0$ ... $S_9$ has been manipulated. If it is detected that a numerical key $S_0$ ... $S_9$ has been depressed, data from the latch 52 of Fig. 5 is stored in a memory of the microcomputer 62 in a following step 111.

On the other hand, if a key other than a numerical key $S_0$ .... $S_9$ has been depressed, the answer of the step 110 is NO, and thus a step 112 of Fig. 8 takes place. If the depressed key is the clear key Sc, data prestored in the memory will be cleared in a step 113 to go to the step 109. If the answer of the step 112 is NO, namely if the multiplication key Sx or the IN key $S_{IN}$ has been depressed, a step 114 takes place in which it is detected whether the depressed key is the multiplication key Sx. When the answer of the step 114 is YES, a flag N is set to 1, in a step 115, indicating that multipication is to be effected. When the flag N is set to 1 in the step 115, the operatinal flow returns to the step 109 so that numerical data input by the numerical key or keys $S_0$ ... $S_9$ will be stored as a multiplicand in the step 111. Turning back to the step 114, if the answer of the step 114 is NO, namely, when the IN key $S_{IN}$ has been depressed again, a step 116 takes place to complete the data storing operation. Then in a step 117, the flag N is set to 0, and then in a following step 118, it is detected whether the format is correct. In the case that the format is detected to be incorrect, the step 101 of Fig. 7 again takes place. If the format is correct, a step 119 is executed to output the data stored in the memory. Then a step 120 takes place to turn on the light-emitting diode 27 so that the light-emitting diode 27 emits light for a predetermined period of time. After the step 120, the operational flow returns to the step 101.

As described in the above, since the apparatus comprises both the function of reading a bar code with electronic scanning in the image sensor 21 and the function of manually inputting the bar code information, it is possible to manually input the information by means of the manually operable keys 40 immediately, and thus input or feeding of bar code information can be continued without interruption when it is needed to continuously read bar codes attached to goods with POS terminals or the like. Therefore, in the case that bar code reading operation by electronic scanning is impossible due to partial stain on a bar code, partial missing, malfunction in the optical system or the like, manual input by the manually operable code keys 40 is advantageous.

Although it has been shown as an embodiment that the apparatus comprises an electronic scanning type image sensor 21 as the reading sensor, other types of reading sensors, such as laser scanning type reading sensor or mechanical scanning type reading sensor, may also be used as long as the reading sensor reads with automatic scanning.

In addition, in order to prevent erroneous manipulation on manual input of the bar code information by means of the manually operable code keys 40, a numeral display may be provided to the bar code reading apparatus at a portion which can be readily seen so that numerals of depressed switches can be displayed.

Furthermore, although an example having ten numerical switches is shown as the manually operable code keys 40, it is possible to employ a single switch, a numeral display and a digit-shifting switch may be provided to display and input the numeral using the depressing interval of the switch or the number of times of manipulations.

As the processing means, although the microcomputer 62 has been shown as an example, it can be constructed of an an electronic circuit of hard logic.

Furthermore, although an example in which completion of reading of a bar code by the reading sensor is displayed by means of the light-emitting diode 27 has been shown, it is possible to arrange such that another light-emitting diode which emits different color light from that of the above may be energized so that unreadable state can be asceartained by the same exclusively provided.

As described in the above, according to the present invention there is a superior advantage that bar code information can be manually input by manipulating the manually operable code keys which are provided to the hand held unit even if reading operation is impossible due to stain or the like when photoelectrical reading is effected to read a bar code with automatic scanning in the direction intersecting the parallel bars with a reading sensor.

The above-described embodiment is just an example of the present invention, and therefore, it will be apparent for those skilled in the art that many modifications and variations may be made without departing from the scope of the present invention as defined by the claims.

**Claims**

1. Optical reading apparatus comprising a hand-held optical scanner (12) including a keyboard (40) and connected by lead wires to a data processing unit (50, 60) wherein first data indicative of markings (11) to be read and second data corresponding to manipulation of the keyboard (40) are processed to recognise the marking information either automatically read or input via the keyboard, wherein the optical scanner (12) comprises photo-sensitive means (21) for scanning and converting an image (12a) of markings (11) to be read into an electrical signal, a clock generator (31) for producing first ($C_t$) and second ($C_s$) trains of clock pulses with which the photosensitive means (21) is controlled to effect scanning, and the keyboard (40) which is manually operable to generate electrical key signals each corresponding to a predetermined numeral, characterised in that the apparatus is for reading a bar code (11), in that the scanner further comprises shift register means (33) for converting the said key signals to serial signal form in response to the trains ($C_t$, $C_s$) of clock pulses and in that the processing unit.--comprises a signal processing circuit (61) connected along the lead wire means to the electrical signal from the photo sensitive means (21) for generating the said first data, and a code key inputting circuit (50) connected along the lead wires and responsive to the said serial signal and the trains of clock pulses ($C_t$, $C_s$) for generating the said second data.

2. An apparatus according to claim 1, wherein the data processing unit (60) comprises a microcomputer (62) programmed to process both said first and second data.

3. Apparatus according to claim 1 or claim 2, further comprising an indicator (27) arranged to be driven by a signal from the data processing unit (60 to indicate that information of the bar code (11) has been read by automatic reading operation.

4. Apparatus according to any one of claims 1 to 3, wherein the code key inputting circuit (50) comprises a counter (51) arranged to count the number of pulses of the train of clock pulses from said clock generator; a latch (52) arranged to temporarily store a counted value from the counter (51) in response to the signal from the shift register (33); and a signal detector (53) responsive to the signal from said shift register (33) for producing a detection signal, the detection signal being fed to data processing unit (60) so that data stored in the latch (52) is fed to the data processing unit (60) as the second data.

5. Apparatus according to any one of claims 1 to 4, further comprising a manually operable key ($S_{IN}$) for producing a control signal indicating that either manual inputting is to be started or manual inputting has been completed, the signal being fed to the data processing unit (50, 60) so that the data processing unit (50, 60) is controlled to process the second data in place of the first data.

6. Apparatus according to any one of claims 1 to 5, further comprising a manually operable key (5c) for producing a signal indicating that manual inputting has been erroneously done, the signal being fed to the data processing unit (50, 60) so that the second data based on erroneous manipulation of the keys is cleared.

7. Apparatus according to any one of claims 1 to 6, further comprising a manually operable key (5x) for producing a signal indicative of instructions of manipulation, the signal being fed to the data processing unit (50, 60) so that the data processing circuit will be prepared to receive the second data as a multiplicand to be multiplied with bar code (11) information already stored.

8. Apparatus according to any one of claims 1 to 7, and comprising an analog amplifier responsive to the output signal from the photosensitive means; the signal processing circuit comprising an analog-to-digital converter (61) being connected along the lead wire means to the output signal from the analog amplifier, the analog-to-digital converter receiving the train of clock pulses from the clock generator (31) to effect analog-to-digital conversion.

**Patentansprüche**

1. Optische Lesevorrichtung, welche aufweist: einen handhaltbaren optischen Leser (12) mit einer Tastatur (40), welcher durch Leitungsdrähte mit einer Datenverarbeitungseinheit (50, 60) verbunden ist, worin erste Daten, welche zu lesende Marken (11) anzeigen und zweite Daten, welche der Handhabung der Tastatur (40) entsprechen, verarbeitet werden, um die gekennzeichnete Information, welche entweder automatisch gelesen, oder über die Tastatur eingegeben wird, zu erkennen, worin der optische Leser (12) eine fotoempfindliche Vorrichtung (21) aufweist, zum Abtasten und Umsetzen einer Abbildung (12a) der zu lesenden Marken (11) in ein elektrisches Signal, einen Taktgenerator (31) zum Erzeugen erster ($C_t$) und zweiter ($C_s$) Taktimpulszügen, mit welchen die fotoempfindliche Vorrichtung (21) gesteuert wird, um ein Abtasten zu erreichen, und die Tastatur (40), welche manuell betreibbar ist, um elektrische Tastensignale zu erzeugen, von denen jedes einer vorbestimmten Ziffer entspricht, dadurch gekennzeichnet, daß die Vorrichtung zum Lesen eines Strich-Codes (11) ist, daß der Abtaster weiterhin eine Schieberegistervorrichtung (33) aufweist, zum Umsetzen des Tastensignals in eine serielle Signal-form als Antwort auf die Taktimpulszüge ($C_t$, $C_s$), und das die Datenverarbeitungseinheit einen Signalverarbeitungsschaltkreis (61) aufweist, welcher längs der Drahtleitungsvorrichtung mit dem elektrischen Signal von der fotoempfindlichen Vorrichtung (21) verbunden ist, zum Erzeugen des ersten Datums, und einen Tastencode-Eingabeschaltkreis (50), welcher längs der Drahtleitung geschaltet ist und auf das serielle Signal und die Taktimpulszüge ($C_t$, $C_s$) anspricht, zum Erzeugen des zweiten Datums.

2. Vorrichtung nach Anspruch 1, worin die Datenverarbeitungseinheit (60) einen Mikrocomputer (62) aufweist, welcher programmiert ist, um beide, das erste und das zweite Datum zu verarbeiten.

3. Vorrichtung nach Anspruch 1 oder 2, welche weiterhin einen Indikator (27) aufweist, welcher angeordnet ist, um durch ein Signal von der Datenverarbeitungseinheit (60) getrieben zu werden, um anzuzeigen, daß Information des Strich-Codes (11) durch eine automatische Leseroperation gelesen worden ist.

4. Vorrichtung nach einem der Ansprüche 1 bis 3, worin der Tastencode-Eingabeschaltkreis (50) einen Zähler (51) aufweist, welcher angeordnet ist, um die Zahl der Impulse des Zuges der Taktimpulse von dem Taktgenerator zu zählen; ein Latch (52), welches angeordnet ist, um vorübergehend einen gezählten Wert von dem Zähler (51) zu speichern, als Antwort auf das Signal von dem Schieberegister (33); und einen Signaldetektor (53), welcher auf das Signal von dem Schieberegister (33) anspricht, zum Erzeugen eines Detektionssignals, wobei das Detektionssignal zu der Datenverarbeitungseinheit (60) geführt wird, so daß des Datum, welches in dem Latch (52) gespeichert ist, als zweites Datum zu der Datenverarbeitungseinheit (60) geführt wird.

5. Vorrichtung nach einem der Ansprüche 1 bis 4, welche weiterhin eine manuell betreibbare Taste ($S_{IN}$) aufweist, zum Erzeugen eines Steuersignals, welches anzeigt, daß entweder manuelle Eingabe gestartet wird oder manuelle Eingabe vervollständigt worden ist, wobei das Signal zur Datenverarbeitungseinheit (50, 60) geführt wird, so daß die Datenverarbeitungseinheit (50, 60) gesteuert wird, um das zweite Datum an Stelle des ersten Datums zu verarbeiten.

6. Vorrichtung nach einem der Ansprüche 1 bis 5, welche weiterhin eine manuell betreibbare Taste (5c) aufweist, zum Erzeugen eines Signals, welches anzeigt, daß manuelle Eingabe fehlerhaft gemacht wurde, wobei das Signal zu der Datenverarbeitungseinheit (50, 60) geführt wird, so daß das zweite Datum, welches auf eine fehlerhafte Handhabung der Tasten basiert, gelöscht wird.

7. Vorrichtung nach einem der Ansprüche 1 bis 6, welche weiterhin eine manuell betreibbare Taste (5x) aufweist, zum Erzeugen eines Signals, welches Handhabungsinstruktionen anzeigt, wobei das Signal zu der Datenverarbeitungseinheit (50, 60) geführt wird, so daß der Datenverarbeitungsschaltkreis vorbereitet wird, um das zweite Datum als einen Multiplikant zu empfangen, welcher mit der bereits gespeicherten Strich-Code (11)-Information multipliziert wird.

8. Vorrichtung nach einem der Ansprüche 1 bis 7, welche einen Analogverstärker aufweist, welcher auf das Ausgangssignal von der fotoempfindlichen Vorrichtung anspricht; der Signalverarbeitungsschaltkreis einen Analog-Digitalumsetzer (61) aufweist, welcher längs der Drahtleitungsvorrichtung mit dem Ausgangssignal des Analogverstärkers verbunden ist, wobei der Analog-Digitalumsetzer den Taktimpulszug von dem Taktgenerator (31) empfängt, um Analog-Digitalumsetzung auszuführen.

**Revendications**

1. Appareil de lecture optique comprenant un dispositif de balayage tenu à lamain (12) comportant un clavier (40) et connecté par des fils à un ensemble de traitement des données (50, 60) dans lequel une première donnée représentative de repères (11) devant être lus et une seconde donnée correspondant à la manipulation du clavier (40) sont traitées pour reconnaître l'information des repères soit lue automatiquement soit entrée via le clavier, où le dispositif de balavage optique (12) comprend un moyen photosensible (21) pour balayer et transformer une image (12a) des repères (11) à lire en signal électrique, un générateur d'horloge (31) pour produire des premier ($C_t$) et second ($C_s$) trains d'impulsions d'horloge avec lesquelles le moyen photosensbile (21) est commandé pour effectuer le balayage, et le clavier (40) qui peut fonctionner manuellement pour produire des signaux électriques de touche correspondant chacun à un nombre prédéterminé, caractérisé en ce que l'appareil sert à la lecture d'un code à barres (11), en ce que le dispositif de balayage comprend en outre un moyen de registre à décalage (33) pour transformer les signaux de touche en une forme de signaux sériels en réponse aux trains ($C_t$, $C_s$) d'impulsions d'horloge, et en ce que l'ensemble de traitement comprend un circuit de traitement du signal (61) connecté avec les moyens de fil au signal électrique provenant du moyen photosensible (21) pour produire la première donnée, et un circuit d'entrée de touche de code (50) connecté avec les fils et répondant au signal sériel et aux trains d'impulsions d'horloge ($C_t$, $C_s$) pour produire la seconde donnée.

2. Appareil selon la revendication 1, dans lequel l'ensemble de traitement des données (60) comprend un micro-ordinateur (62) programmé de façon à traiter la première ainsi que la seconde donnée.

3. Appareil selon la revendication 1 ou la revendication 2, comprenant en outre un indicateur (27) disposé de manière à être attaqué par un signal provenant de l'ensemble de traitement des données (60) pour indiquer que l'information du code à barres (11) a été lue par une opération de lecture automatique.

4. Appareil selon l'une quelconque des revendications 1 à 3, dans lequel le circuit d'entrée de la touche de code (50) comprend un compteur (51) agencé de manière à compter le nombre d'impulsions du train d'impulsions d'horloge provenant du générateur d'horloge; une bascule (52) agencée pour stocker temporairement une valeur comptée en provenance du compteur (51) en réponse au signal provenant du registre à décalage (33); et un détecteur de signal (53) répondant au signal provenant du registre à décalage (33) pour produire unsignal de détection, le signal de détection étant appliqué à l'ensemble de traitement des données (60) de façon que la donnée stockée dans la bascule (52) soit introduite dans l'ensemble de traitement des données (60) comme la seconde donnée.

5. Appareil selon l'une quelconque des revendications 1 à 4, comprenant en outre une touche pouvant être actionnée manuellement ($S_{IN}$) pour

produire un signal de commande indiquant que soit une entrée manuelle doit être démarrée soit une entrée manuelle a été achevée, le signal étant appliqué à l'ensemble de traitement des données (50, 60) de sorte que l'ensemble de traitement des données (50, 60) est commandé pour traiter la seconde donnée à la place de la première donnée.

6. Appareil selon l'une quelconque des revendications 1 à 5, comprenant en outre une touche pouvant être actionnée manuellement (5c) pour produire un signal indiquant qu'une entrée manuelle a été faite par erreur, le signal étant appliqué à l'ensemble de traitement des données (50, 60) de façon que la seconde donnée basée sur une manipulation erronée des touches soit effacée.

7. Appareil selon l'une quelconque des revendications 1 à 6, comprenant en outre une touche pouvant être actionnée manuellement (5x) pour produire un signal représentatif d'instructions de manipulation, le signal étant appliqué à l'ensemble de traitement des données (50, 60) de façon que le circuit de traitement des données soit préparé pour recevoir la seconde donnée comme multiplicande devant être multiplié par l'information du code à barres (11) déjà stockée.

8. Appareil selon l'une quelconque des revendications 1 à 7, et comprenant un amplificateur analogique répondant au signal sortant du moyen photosensible; le circuit de traitement du signal comprenant un convertisseur analogique/numérique (61) connecté avec les moyens de fil au signal sortant de l'amplificateur analogique, le convertisseur analogique/numérique recevant le train d'impulsions d'horloge provenant du générateur d'horloge (31) afin d'effectuer la conversion analogique/numérique.

## FIG. 1

EP  0 069 574  B1

# FIG. 2

# FIG. 3

## FIG. 4

MICROCOMPUTER 62

## FIG. 5

## FIG. 6A

## FIG. 6B

## FIG. 6C

## FIG. 7

**START**

INITIALZE

(3)

$S_{IN}$ DEPRESSED? — 101 — YES

NO

IS LABEL PRESENT? — 102 — NO

YES — 103

STORE BAR WIDTH DATA INTO MEMRORY

DECODE STORED DATA — 104

IS FORMAT CORRECT? — 105 — NO

YES — 106

OUTPUT DATA

ENERGIZE LED — 107

(3)

FEED DATA FROM LATCH — 108

(2)

ANY KEY DEPRESSED? — 109 — NO

YES

NUMERICAL KEY? — 110 — NO

YES

STORE DATA — 111

(1)

*FIG. 8*